# EUROPEAN PATENT SPECIFICATION

(11) **EP 4 389 455 B1**
(45) Date of publication and mention of the grant of the patent: **12.08.2026**
(21) Application number: 22383238.7
(22) Date of filing: 19.12.2022
(51) Int. Cl.: B60B 21/12, B65H 37/04, B60B 31/00

(54) **MACHINE AND METHOD FOR AUTOMATIC APPLICATION OF RIM TAPE**
MASCHINE UND VERFAHREN ZUM AUTOMATISCHEN ANBRINGEN EINES FELGENBANDES
MACHINE ET PROCÉDÉ D'APPLICATION AUTOMATIQUE DE BANDE DE CERCLAGE

(43) Date of publication of application: 26.06.2024
(73) Proprietor: ORBEA, S. COOP., 48269 Mallabia (BIZKAIA) (ES)
(72) Inventor: CAMBRONERO GONZÁLEZ, Juan Carlos, Mallabia (BIZKAIA) (ES); CALVO CAMBRONERO, Antonio Javier, Mallabia (BIZKAIA) (ES); SERRANO FUENTES, Luis, Mallabia (BIZKAIA) (ES); MARTÍN GARCÍA, Manuel, Mallabia (BIZKAIA) (ES)
(74) Representative: Cueto, Sénida

(56) References cited:
- NL-C2- 1 022 202
- US-A- 5 302 229

## Description

### Field of the invention

The invention relates to an automatic machine for applying rim tapes for bicycle wheels and to the automatic method of applying the rim tape.

### Prior art

Rim tape is an essential element for protecting the air inner tube inside the tyre on a bicycle wheel to prevent direct contact with the spokes, which can cause unwanted punctures. In these cases, the rim tape is usually made of rubber as well as being elastic and having adhesive backing to aid installation.

Currently, bicycle wheels without an air inner tube, known as tubeless, are also known, where the tyre is sealed directly onto the rim. In this type of wheel, the rim tape is an adhesive tape that is installed manually and must be well sealed. However, the installation of this type of adhesive rim tape requires very careful and exhaustive placing, with a lot of pressure in the various turns that are given to the rim, so that it is a very difficult process to carry out manually if one wants to guarantee a good sealing and tightness.

Due to the precision required by the work of applying the adhesive tape, generally done manually, there are currently several systems or devices, such as that described in patent CN211563778U, to speed up and facilitate the work.

The utility model CN211563778U describes an electrically operated machine for sticking adhesive rim tape on a rim. The steel rim is placed vertically and/or axially and positioned inside the device, and at the top of the rim there is a rubber pressure roller that presses the tape onto the rim. Once the tape has been put into position, the device is also able to cut it off, although in a way that is not specified. The described device comprises control knobs that start and stop the machine. However, it is possible that a wheel finished using this machine may be far from perfect in terms of not being tightness or sealing enough of the groove of the rim for the correct assembly of tubeless tyres.

The document NL1022202C2 discloses a tape application machine according to the preamble of claim 1.

The objective of the invention is to provide a machine for applying rim tapes that performs the taping and sealing process of the rim tape in an improved way, and the automatic method to prevent wrist injuries that operators may suffer when applying rim tape.

### Brief description of the invention

The object of the invention is a machine for the automatic application of rim tapes and a semi-automatic method for the application of rim tapes using the machine of the invention. Therefore, this is a description of a machine that distributes, places, fixes and moulds a tape to the bottom of the rim to protect the air inner tube and the seal of a bicycle tyre.

According to the present invention, the object is solved by a machine for applying a tape on a rim of a wheel of a bicycle according to claim 1.

The tape used, which is preferably self-adhesive and high performance, is fixed to the bottom of the wheel rim by means of a tape dispensing system, while the positioning and retention system rotates the wheel. Once the tape has been placed on the bottom of the rim, an automatic cutting system of the dispensing system can cut the tape.

According to the present invention, the at least one pressure roller exerts pressure on the tape that a moment before has been heated up, achieving high-quality shaping and sealing of the tape and making the rim valid for tubeless tyres also.

Preferably, the machine is automatic, as it includes an automation system to programme all the parameters of the taping process. In other words, thanks to the automation system, the taping of the rim tape is carried out automatically depending on the system configuration, which is in charge of managing and sending the operating order automatically to all the machine systems. As a result, the automation system is connected to the positioning and retention system, the dispensing system, the cutting system and the shaping system.

According to the present invention, the object is solved by a method for placing a tape on a rim of a wheel of a bicycle according to claim 11.

Preferred embodiments of the present invention are laid down in the dependent claims.

Due to all of the above, the machine of the invention manages to tape of the rim of a bicycle wheel by means of a fully automatic operation of the machine quickly and precisely, by means of the quick programming of the machine. In addition, it is possible to optimise the results with perfect placement of the tape thanks to the use of heat for fixing and moulding, minimizing the manual efforts needed by the operators, so that highly qualified personnel are not required. This gives a seal that meets the requirements of protecting the air inner tube of a tyre and/or making the wheel suitable for a tubeless tyre.

### Brief description of the figures

The details of the invention can be seen in the accompanying figures, not to be considered limiting of its scope, which is defined by the appended claims:
- Figure 1A shows a front view of the machine (1) of the invention, for applying a tape (5) on a rim (3a), in operational mode.
- Figure 1B shows a front view of the machine (1) of the invention, for applying a tape (5) on a rim (3a), in resting mode.
- Figure 2 shows a profile view of the machine (1) of Figure 1.
- Figure 3 shows a rear perspective of the machine (1) of Figure 1 without its cover (2c).
- Figure 4 shows a detailed front view of the dispensing system (6) of the machine (1) of the invention.
- Figure 5 shows a detailed front view of the shaping system (8) of the machine (1) of the invention.
- Figure 6 shows a rear perspective view in detail, of the dispensing system (6) and of the punch (11) of the machine (1) of Figure 3.
- Figure 7 shows a perspective of an embodiment of the machine (1) in the situation of Figure 1B with safety bars (13).

### Detailed description of the invention

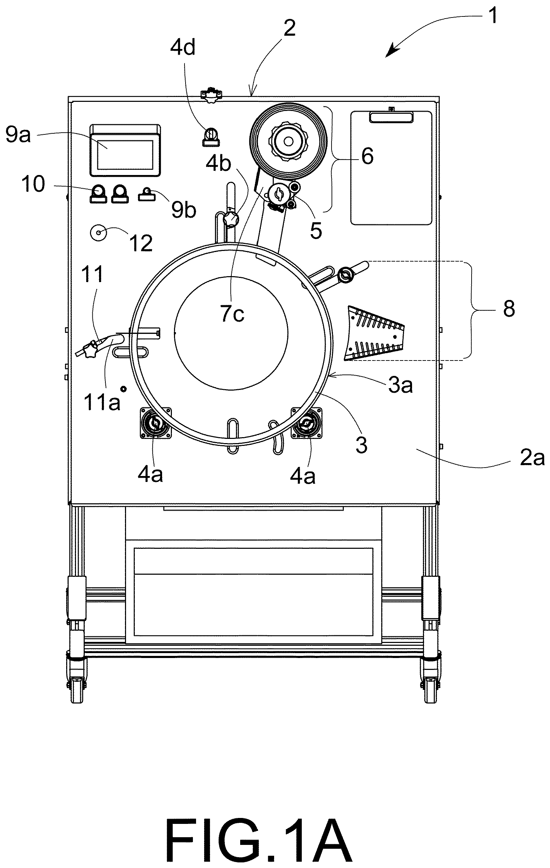

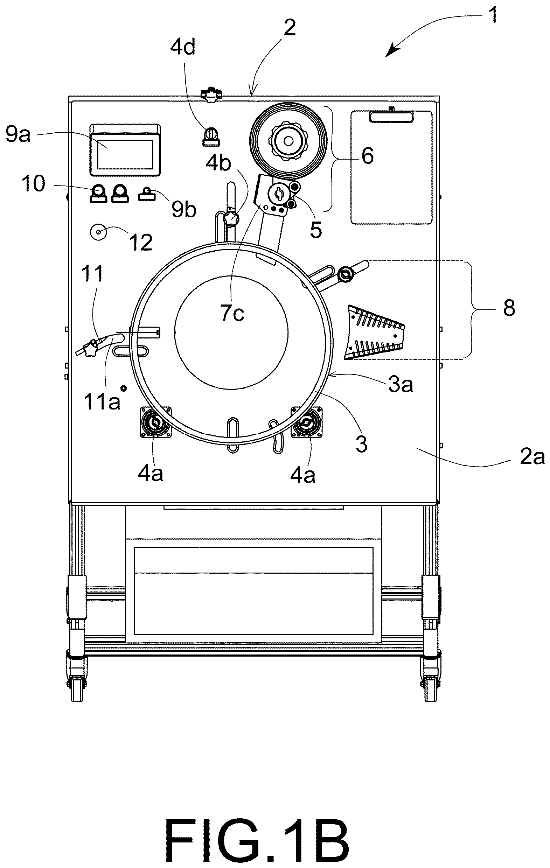

The invention refers to a machine (1) for the automatic application of a tape (5) on a rim (3a) like the one shown in Figures 1 to 3. That is, a machine (1) that applies, for example, self-adhesive tape (5) to the bottom of the rim (3a) of a wheel (3) to protect the air inner tube and/or seal the rim (3a) to later place a tyre on the wheel (3) of a bicycle.

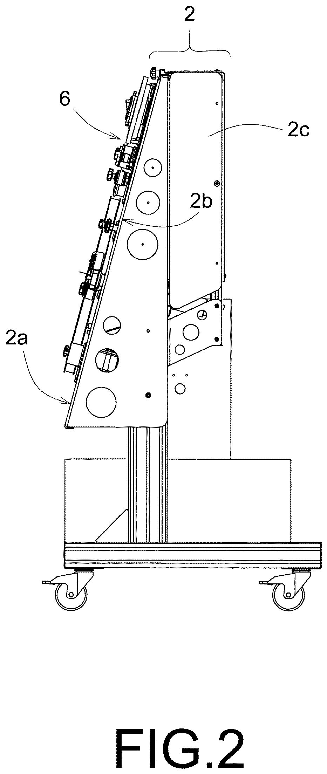

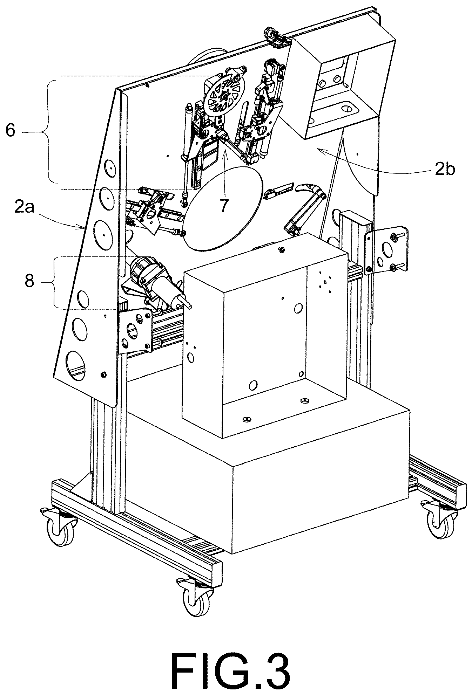

The machine (1) of the invention comprises a stand (2) with a front surface (2a) where the wheel (3) is placed and a rear surface (2b) that has a cover (2c) that protects some systems forming part of the machine (1) as shown in Figures 2 and 3. Specifically, the wheel (3) is placed on at least two fixed rollers (4a) on the lower part of the stand (2) and at least one movable roller (4b) on the upper part of the stand (2), which form a positioning and retention system (4) for the wheel (3). The movable roller (4b) is moved along a longitudinal guide (4c), which allows the user to adjust the positioning and retention system (4) to different diameters of wheel (3). When the wheel (3) is placed and the movable roller (4b) is adjusted to the diameter of the wheel (3), it can be seen that on the movable roller (4b) there is a locking button (4d) to lock the movement of the movable roller (4b) in the longitudinal guide (4c). As a result, after the retention of the movable roller (4b), the wheel (3) can only rotate due to friction from the rotation of the fixed rollers (4a) and the pressure of the rollers (4a, 4b) on the edge of the rim (3a) since the rollers (4a, 4b) are slightly thicker than the width of the rim (3a).

As shown in Figures 1A to 3 and 7, the stand (2) of the machine (1) of the invention comprises an inclined front surface (2a) that improves operator ergonomics and minimizes work injuries. In addition, it includes at least four wheels at the bottom of the stand (2) to make it easy to move from one place to another.

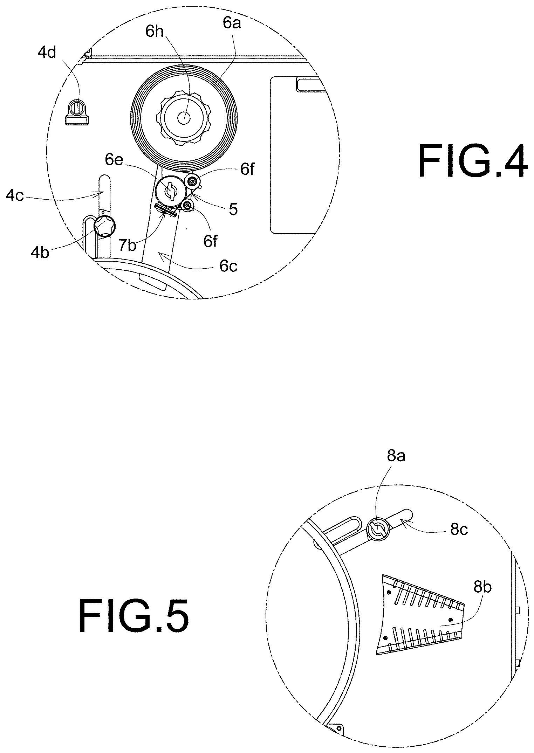

As can also be seen in Figures 1A and 1B and in more detail in Figure 4, on the front surface (2a), specifically above the wheel (3) and the movable roller (4b), there is a mobile dispensing system (6) of tape (5). In other words, the dispensing system (6) can move along a radial guide (6g) fixed to a base of the rear surface (2b) of the stand (2), parallel to a guide groove (6c) of the stand (2) from a resting position at the upper part of the stand (2) until it comes into contact with the wheel (3) to be taped. The dispensing system (6) comprises a roll (6a) of tape (5) placed and fixed on an axle (6h) attached to a tensioning system (6b) that is located between the wheel (3) and the roll (6a) on the front surface (2a) of the stand (2). The tensioning system (6b) of the dispensing system (6) comprises at least three rollers, where at least one roller (6e) has a diameter larger than the diameter of the other two guide rollers (6f). In other words, the roller (6e) with the larger diameter will have the purpose of tensioning the tape (5) to prevent wrinkles and the rollers (6f) with a smaller diameter above and below the roller (6e) are for directing the tape (5) towards the bottom of the rim (3a). The roller (6e) that is in contact with the bottom of the rim (3a) has the same thickness as the width of the bottom of the rim (3a) in order to be inserted into it and fix the tape (5) completely flat. In addition, the dispensing system (6) is capable of moving along the radial guide (6g) and the guide groove (6c) from a resting position to the wheel (3) when activated by a start button (10) on the upper part of the stand (2).

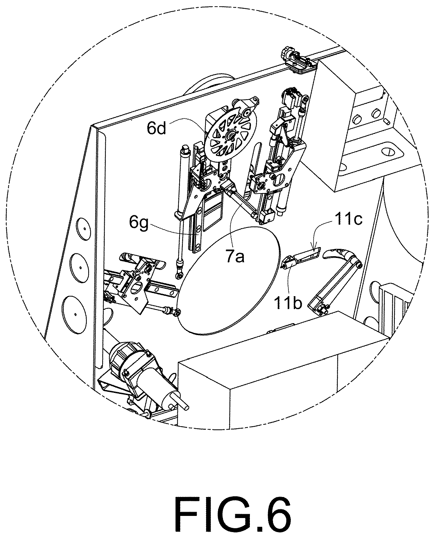

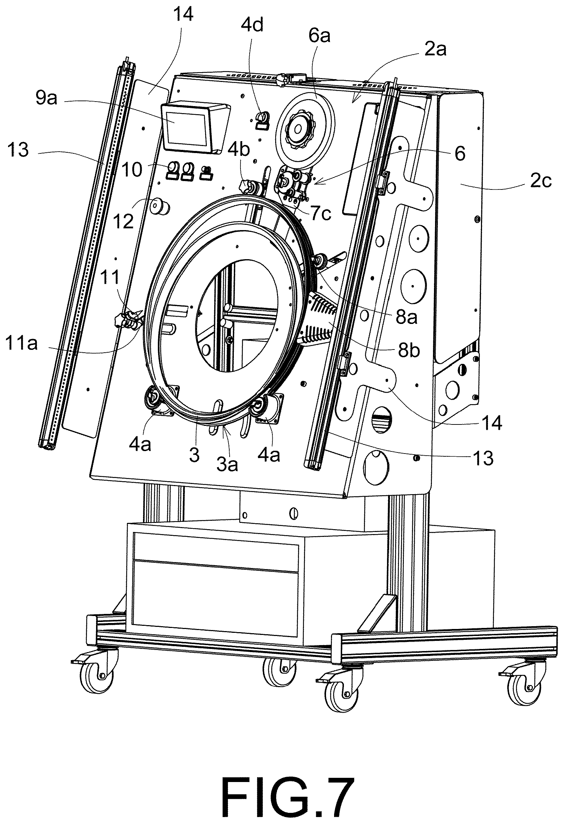

In addition, the dispensing system (6) also comprises a retention system (6d) formed, for example, of a brake disc installed on a rear surface (2b) of the stand (2) connected to the dispensing system (6), to exert a certain dosed retention on the axle (6h) of the roll (6a) as shown in Figures 3 and 6, so that the tape (5) is also placed on the bottom of the rim (3a) with the right tension to stick it as strongly and smoothly as possible. This retention system (6d) also has a regulation device to establish the necessary tension of the tape (5). As also shown in figures 1A, 3 and 4, the dispensing system (6) is also connected to a movable and displaceable cutting system (7) next to the dispensing system (6), since once the necessary tape (5) has been dispensed on the bottom of the rim (3a), the tape (5) must be cut. To do so, the cutting system (7) comprises a protector (7c) that is located on the front surface (2a) as shown in Figures 1A, 1B and 7, behind which there is a blade (7b) attached to a pneumatic piston (7a) located on the rear surface (2b) of the stand (2). The pneumatic piston (7a) moves the blade (7b) perpendicularly, so that the blade (7b) passes through the stand (2) from the rear surface (2b) towards the front surface (2a) through a lower area of the guide groove (6c). The protector (7c) is for protecting the blade (7b) when it is necessary for the operator to handle the roll (6a) for its replacement or when the machine (1) is not in operation. In other words, the protector (7c) can be moved from a resting position as shown in Figure 1A, where the blade (7b) is exposed when the machine (1) is in operation, to a protective position shown in Figure 1B, where the blade (7b) is covered by the front surface (2a), when the machine (1) is not operating or the roll (6a) must be replaced. In the preferred embodiment of the invention, the protector (7c) comprises a C-shaped flat body that, together with the axle (6h), limits the movement of the protector (7c).

Furthermore, the machine (1) of the invention, as can be seen in figure 5, is characterized in that in a lateral area of the stand (2) there is a shaping system (8) that comprises at least one pressure roller (8a) that is laterally displaceable along a lateral guide (8c), from a resting position at an outer end of the lateral guide (8c) of the stand (2) towards an active position in contact with the interior of the rim (3a) and a heat dispenser (8b) on the front surface (2a) oriented to dispense heat towards the wheel (3). By means of this shaping system (8) and once the tape (5) is placed on the bottom of the rim (3a), heat is applied by means of the heat dispenser (8b) and pressure with the pressure roller (8a), achieving the regular shape of the tape (5), and thus eliminating bubbles so that it is completely adhered and matched, i.e., that the seal is tight and guarantees the necessary tightness for the assembly of the tyre or tubeless tyre. To do this, the pressure roller (8a) must have a thickness and shape equal to the bottom of the rim (3a) so it must be exchangeable depending on the wheel (3) to be taped.

Next, as figures 1A and 1B and figure 6 show in detail, on the other side of the wheel (3), that is, on the opposite side to the shaping system (8), the stand (2) comprises a punch (11) which can be moved along a guide (11a) and oriented by means of a laser (11b) designed to mark a hole for a valve of the wheel (3) so that the punch (11) moves and make a hole for the valve of the wheel (3) on the tape (5). Specifically, the laser (11b) projector is located on the rear surface (2b) of the stand (2) at the height of the punch (11) and oriented towards the punch (11) and a slot (11c) of the stand (2) that makes it possible to project a light on the rim (3a) the punch (11) and the slot (11c).

In addition, as previously mentioned, the object of the invention is an automatic machine (1) for applying a tape (5) on a rim (3a). Therefore, the machine (1) includes an automation system (9) whereby it is possible to establish and define the taping parameters necessary to carry out the process of placing the tape (5) on the bottom of the rim (3a) automatically. As seen in Figures 1A and 1B, the stand (2) comprises an automation system (9) in the upper area connected to all the previously mentioned systems through the rear surface (2b) of the stand (2) as shown in Figure 3. The automation system (9) comprises a display or touch screen (9a) on the front surface (2a) of the stand (2) that is easily accessible to the user, where the user can enter the following parameters:
- Taping process;
   - Number of complete turns that the wheel (3) will make for the placing of the tape (5)
   - Wheel (3) rotation speed
   - Length of tape (5) used
   - Position of the valve hole to calculate the overlap of the tape (5) on the valve hole.
- Shaping process:
   - Number of complete turns of the wheel (3) that occurs with the pressure roller (8a) applying pressure to the bottom of the rim (3a).
   - Turning speed of the wheel (3) while the pressure roller (8a) presses the tape (5).
   - Action of the pressure roller (8a).
   - Diffusion time and temperature of the heat dispenser (8b).

The touch screen (9a) also allows various different options such as; the option to cancel the activity of the machine (1), to choose the blade (7b) change option, where the cutting system (7) moves towards the front surface (2a) to give the user access to the blade (7b) and the option to preheat, an option necessary to start using the machine (1).

Additionally, and for safety, the machine (1) can include an emergency stop button (12) and an automated system for stopping and resetting the automation system (9) and the machine (1). In alternative embodiments, the machine (1) can also include a protection system by means of sensors to prevent people approaching the perimeter while the machine (1) is in operation. In the preferred embodiment, the protection system consists of safety bars (13) on fixations (14) on the sides of the front surface (2a) as shown in Figure 7. The safety bars (13) are a security solution based on emitting beams of light from one bar (13) to another so that if something interrupts the beam of light while the machine (1) is in operation it is detected by means of sensors.

Therefore, the machine (1) of the invention is for taping the rim (3a) of a wheel (3) quickly, easily, conveniently and safely for the operator or user of the machine (1), achieving optimal placement of the tape (5) for the use of tubeless tyres, in a safe way for the operator.

The invention also refers to an automatic method for applying the rim tape by means of the machine (1) of the invention, where the machine (1) is activated to rotate a wheel (3) and place a tape (5) on a bottom of the rim (3a). In other words, the tape (5) application method can be fully automatic or semi-automatic, where the steps are carried out fully automated or by an operator and the machine (1). The operator merely has to place the wheel (3), start the machine (1), finish and remove the wheel (3).

Initially, an automation system (9) is configured by means of a touch screen (9a) which is adjustable by means of a control knob (9b). Both elements (9a, 9b) are located in an upper front surface (2a) of the machine (1) and are designed to configure the parameters of the machine (1), such as the number of taping turns, the speed of rotation, the overlapping of the tape (5), the number of turns of the shaping, the temperature of shaping, heat exposure time, etc. depending on the bicycle wheel (3) that needs to be taped.

Next, the wheel (3) is placed in the machine (1) resting on at least two fixed rollers (4a) as indicated by the projection of a laser (11b) on the internal part of the wheel (3), that is to say that a valve hole of the wheel (3) must coincide with the projection of the laser (11b) on the bottom of the wheel (3). Once the wheel (3) is resting and the valve hole is located, the wheel (3) is fixed by means of at least one movable roller (4b), which can be moved along a longitudinal guide (4c) to adjust it to the diameter of the wheel (3). After fixing the wheel (3) with the movable roller (4b), the screw or locking button (4d) is pressed to block the longitudinal movement of the movable roller (4b).

Once the wheel (3) is fixed, a protector (7c) of a cutting system (7) is raised and at least two motors connected to the fixed rollers (4a), located on the rear surface (2b) of the machine (1), are activated, which will start the automation process of the machine (1) systems, by optionally activating a start button (10). That is to say, the fixed rollers (4a) begin to rotate, which by friction make the wheel (3) rotate and the path established for the overlapping parameter of the tape (5) will rotate over the valve hole. Once sufficient turn has been made for the overlapping of the tape (5), the fixed rollers (4a) stop and a dispensing system (6) moves along a radial guide (6g) of the system (6) thanks to a guide groove (6c) of the stand (2) until a tensioning system (6b) of the dispensing system (6), through which the tape (5) protrudes, comes into contact with the wheel (3), specifically with the bottom of the rim (3a). In this way, the tape (5) sticks to the bottom of the rim (3a) and the fixed rollers (4a) start working again by turning the wheel (3) and sticking the tape (5) without wrinkles and with some tension on the bottom of the rim (3a). Once the taping turns established in the automation system (9) have finished, the fixed rollers (4a) stop turning and the dispensing system (6) returns to its starting position, to activate a cutting system (7) connected to and movable together with the dispensing system (6) at the rear surface (2b) of the stand (2). Therefore, a pneumatic piston (7a) is activated to move a blade (7b) connected to it, from a rear surface (2b) towards a front surface (2a) of the stand (2) through the guide groove (6c) to cut the tape (5) in the area that is under tension between the movable roller (4b) and the tensioning system (6b), which is now in the resting position.

Following the cutting of the tape (5), the rotation of the fixed rollers (4a) is activated again and a shaping system (8) and/or thermal moulding is also activated according to the criteria specified in the automation system (9). In other words, at least one pressure roller (8a) of the shaping system (8) moves along a lateral guide (8c) towards the bottom of the rim (3a) to exert pressure on the tape (5) while a heat dispenser (8b) projects hot air onto the tape (5) before reaching the pressure roller (8a). In this way, a better adhesion of the tape (5) to the bottom of the rim (3a) is achieved and any imperfection that may have remained during the placement of the tape (5) of the rim (3a) is corrected.

Subsequently, when the tape (5) is correctly fixed on the bottom of the rim (3a), the rotation of the wheel (3) and the fixed rollers (4a) stops. Finally, the movable roller (4b) is unlocked, releasing the wheel (3) of the machine (1) and the wheel (3) is turned until the valve hole is positioned where the laser (11b) projection indicates. The wheel (3) is locked again by means of the movable roller (4b) so that, by means of a punch (11) that can be moved along a guide (11a) that is located on the opposite side of the shaping system (8), the tape (5) is perforated at valve hole. Once the valve hole has been punched, the movable roller (4b) is unlocked again, releasing the wheel (3) from the machine (1).

Due to all of the above, an automatic operating machine (1) is achieved for taping the bottom of the rim (3a) of a bicycle wheel (3) and a very simple semi-automatic procedure, thanks to which the effort of placing the tape (5) and the results of the taping are optimized thanks to the dispensing system (6) and shaping system (8). In addition, the parameterization of the automation system (9) for different wheels (3) is dynamic and easy to use thanks to the touch screen (9a) and the many possibilities it offers.

## Claims

1. Machine (1) for applying a tape (5) on a rim (3a) of a wheel (3) of a bicycle, where the wheel (3) is placed on a stand (2) of the machine (1) and is fixed by means of a positioning and retention system (4) that is configured to allow the wheel (3) to rotate to place the tape (5) at the bottom of the rim (3a) by means of a tape dispensing system (6) where the machine (1) is **characterized by** comprising:
- a shaping system (8) for the tape (5) comprising at least one heat dispenser (8b) facing the wheel (3) to heat the tape (5) and at least one pressure roller (8a) that is configured such that can be moved towards the bottom of the rim (3a) to exert pressure on the tape (5), that a moment before has been heated up.

2. Machine (1), according to claim 1, where the machine (1) comprises a cutting system (7) and an automation system (9) configured for the setting of the taping parameters, wherein the automation system (9) comprises a touch screen (9a) and is connected to the positioning and retention system (4), to the dispensing system (6), to the cutting system (7) and to the shaping system (8).

3. Machine (1), according to claim 1, where the positioning and retention system (4) comprises at least two fixed rollers (4a) in a lower part of the stand (2) under the wheel (3) and at least one movable roller (4b) movable along a longitudinal guide (4c) in an upper part of the stand (2) above the wheel (3).

4. Machine (1), according to claim 3, where the dispensing system (6) is located in an upper part of the stand (2) and is movable along a radial guide (6g) fixed to the rear surface (2b) of the stand (2) and parallel to a guide groove (6c) of the stand (2), wherein the dispensing system (6) comprises a roll (6a) of tape (5) attached to a tensioning system (6b), which comprises at least three rollers, with at least one roller (6e) having a diameter larger than the diameter of the other two rollers (6f), the tensioning system (6b) being located between the wheel (3) and the roll (6a) on the front surface (2a) of the stand (2) and wherein the dispensing system (6) also comprises a retention system (6d) on the rear surface (2b) of the stand (2) configured to exert a certain dosed retention on the axle (6h) of the roll (6a) of tape (5).

5. Machine (1), according to claim 4, where the dispensing system (6) is movable from a resting position at the upper part of the front surface (2a) toward a contact position with the wheel (3).

6. Machine (1), according to claim 2, where the cutting system (7) comprises a pneumatic piston (7a) on the rear surface (2b) of the stand (2) that is attached to a blade (7b).

7. Machine (1), according to claim 1, where at least one pressure roller (8a) of the shaping system (8) can be moved laterally along a lateral guide (8c) of the stand (2), from a resting position at one outer end of the lateral guide (8c) towards an active position in contact with the bottom of the rim (3a).

8. Machine (1), according to claim 1, where the at least one pressure roller (8a) has a thickness and shape equal to the bottom of the rim and is exchangeable depending on the dimensions of the rim to be taped.

9. Machine (1), according to claim 1, where the machine (1) comprises a punch (11) that can be moved along a guide (11a) and is oriented by means of a laser (11b) designed to mark a hole, so that the movable punch (11) is configured to make a hole on the tape (5) for the valve of the wheel (3).

10. Machine (1), according to claim 1, where the machine (1) comprises a protection system configured to prevent people approaching the perimeter of the machine (1), the protection system consists of safety bars (13) on fixations (14) on the sides of the front surface (2a), wherein the safety bars (13) emitting beams of light from one bar to another.

11. Method for placing a tape (5) on a rim (3a) of a wheel (3) of a bicycle, where the machine (1) according to claim 1 is activated to rotate the wheel (3) and place the tape (5) on the bottom of the rim (3a), where the method further includes the steps of:
- activating the shaping system (8),
- projecting heat on the tape (5) of the wheel (3) using the at least one heat dispenser (8b),
- subsequently pressing the heated tape (5) by means of the at least one pressure roller (8a) onto the bottom of the rim (3a).

12. Method, according to claim 11, comprising the previous steps of:
- setting an automation system (9), according to some taping parameters for the tape (5) of the rim (3a),
- placing the wheel (3) in the machine (1) resting on at least two fixed rollers (4a) of the positioning and retention system (4),
- fixing the wheel (3) using a laser (11b)designed to mark a hole and a movable punch (11) configured to make the hole in the tape (5) for the valve of the wheel (3)

13. Method, according to claim 12, wherein the machine (1) comprises a cutting system (7) including a blade (7b) activated by a pneumatic piston (7b), the method comprising the additional steps of:
- moving a tape dispensing system (6) until it comes into contact with the wheel (3),
- sticking the tape (5) on the bottom of the rim (3a),
- turning the wheel (3) for sticking the tape (5) according to the taping parameters set,
- cutting the tape (5) with the blade (7b).

14. Method, according to claim 12, wherein the activation of the dispensing system (6) comprises the additional steps of:
- adjusting a retention system (6d) of the dispensing system (6), located at the rear surface (2b) of the stand (2), to exert a certain dosed retention of the axle (6h) of a roll (6a) of tape (5) of the dispensing system (6) so that the tape (5) is placed on the bottom of the rim (3a) with a tension suitable to stick it.

15. Method, according to claim 12, comprising the subsequent steps of:
- turning the wheel (3) to place a valve hole where a laser (11b) projection indicates,
- blocking the wheel (3) by means of a movable roller (4b) of the positioning and retention system (4),
- moving the punch (11) along a guide (11a) to make the hole in the tape (5),
- releasing the wheel (3).

## Patentansprüche

1. Maschine (1) zum Anbringen eines Bandes (5) auf einer Felge (3a) eines Rades (3) eines Fahrrads , wobei das Rad (3) auf einem Ständer (2) der Maschine (1) platziert und mittels eines Positionierungs- und Rückhaltesystems (4) befestigt ist, das so konfiguriert ist, dass es dem Rad (3) ermöglicht, sich zu drehen, um das Band (5) auf der Unterseite der Felge (3a) mittels eines Bandabgabesystems (6) zu platzieren, wobei die Maschine (1) **dadurch gekennzeichnet ist, dass** sie Folgendes umfasst:
- ein Formgebungssystem (8) für das Band (5), das mindestens einen dem Rad (3) zugewandten Wärmespender (8b) zum Erwärmen des Bandes (5) und mindestens eine Andruckrolle (8a) umfasst, die so konfiguriert ist, dass sie in Richtung der Unterseite der Felge (3a) bewegt werden kann, um Druck auf das Band (5) auszuüben, das kurz zuvor erwärmt worden ist.

2. Maschine (1) nach Anspruch 1, wobei die Maschine (1) ein Schneidesystem (7) und ein Automatisierungssystem (9) umfasst, das zur Einstellung der Parameter für das Aufbringen des Bandes konfiguriert ist, wobei das Automatisierungssystem (9) einen Touchscreen (9a) umfasst und mit dem Positionierungs- und Rückhaltesystem (4), dem Abgabesystem (6), dem Schneidesystem (7) und dem Formgebungssystem (8) verbunden ist.

3. Maschine (1) nach Anspruch 1, wobei das Positionierungs- und Rückhaltesystem (4) mindestens zwei feste Rollen (4a) in einem unteren Teil des Ständers (2) unter dem Rad (3) und mindestens eine bewegliche Rolle (4b) umfasst, die entlang einer Längsführung (4c) in einem oberen Teil des Ständers (2) über dem Rad (3) beweglich ist.

4. Maschine (1) nach Anspruch 3, wobei sich das Abgabesystem (6) in einem oberen Teil des Ständers (2) befindet und entlang einer radialen Führung (6g) bewegbar ist, die an der Rückseite (2b) des Ständers (2) befestigt ist und parallel zu einer Führungsnut (6c) des Ständers (2) verläuft, wobei das Abgabesystem (6) eine Rolle (6a) mit Band (5) umfasst, die an einem Spannsystem (6b) befestigt ist, welches mindestens drei Rollen umfasst, wobei mindestens eine Rolle (6e) einen Durchmesser aufweist, der größer ist als der Durchmesser der beiden anderen Rollen (6f), wobei das Spannsystem (6b) zwischen dem Rad (3) und der Rolle (6a) an der Vorderseite (2a) des Ständers (2) angeordnet ist, und wobei das Abgabesystem (6) ferner ein Rückhaltesystem (6d) an der Rückseite (2b) des Ständers (2) umfasst, das so ausgebildet ist, dass es eine bestimmte dosierte Rückhaltung auf die Achse (6h) der Rolle (6a) des Bandes (5) ausübt.

5. Maschine (1) nach Anspruch 4, wobei das Abgabesystem (6) aus einer Ruheposition am oberen Teil der Vorderseite (2a) in Richtung einer Kontaktposition mit dem Rad (3) bewegbar ist.

6. Maschine (1) nach Anspruch 2, wobei das Schneidesystem (7) einen pneumatischen Kolben (7a) auf der Rückseite (2b) des Ständers (2) umfasst, der an einer Klinge (7b) befestigt ist.

7. Maschine (1) nach Anspruch 1, bei der mindestens eine Andruckrolle (8a) des Formgebungssystems (8) seitlich entlang einer Seitenführung (8c) des Ständers (2) aus einer Ruheposition an einem äußeren Ende der Seitenführung (8c) in eine aktive Position in Kontakt mit der Unterseite der Felge (3a) bewegt werden kann.

8. Maschine (1) nach Anspruch 1, wobei die mindestens eine Andruckrolle (8a) eine Dicke und Form aufweist, die der Unterseite der Felge entspricht und je nach den Abmessungen der mit Band zu versehenden Felge austauschbar ist.

9. Maschine (1) nach Anspruch 1, wobei die Maschine (1) einen Stempel (11) umfasst, der entlang einer Führung (11a) bewegt werden kann und mittels eines Lasers (11b) ausgerichtet ist, der dazu bestimmt ist, ein Loch zu markieren, so dass der bewegliche Stempel (11) so konfiguriert ist, dass er ein Loch auf dem Band (5) für das Ventil des Rades (3) herstellt.

10. Maschine (1) nach Anspruch 1, wobei die Maschine (1) ein Schutzsystem umfasst, das so konfiguriert ist, dass es verhindert, dass sich Personen dem Umfang der Maschine (1) nähern, wobei das Schutzsystem aus Sicherheitsstäben (13) an Befestigungen (14) an den Seiten der Vorderseite (2a) besteht, wobei die Sicherheitsstäbe (13) Lichtstrahlen von einem Stab zum anderen aussenden.

11. Verfahren zum Anbringen eines Bandes (5) auf einer Felge (3a) eines Rades (3) eines Fahrrads, wobei die Maschine (1) nach Anspruch 1 aktiviert wird, um das Rad (3) zu drehen und das Band (5) auf der Unterseite der Felge (3a) anzubringen, wobei das Verfahren ferner die folgenden Schritte umfasst:
- Aktivierung des Formgebungssystems (8),
- Aufbringen von Wärme auf das Band (5) des Rades (3) mit Hilfe des mindestens einen Wärmespenders (8b),
- anschließendes Andrücken des erwärmten Bandes (5) mittels der mindestens einen Andruckrolle (8a) auf die Unterseite der Felge (3a).

12. Verfahren nach Anspruch 11, das die folgenden vorherigen Schritte umfasst:
- Einstellen eines Automatisierungssystems (9) entsprechend einigen Parametern für das Aufbringen des Bandes (5) der Felge (3a),
- Einsetzen des Rades (3) in die Maschine (1), wobei es auf mindestens zwei festen Rollen (4a) des Positionierungs- und Rückhaltesystems (4) aufliegt,
- Befestigung des Rades (3) mit Hilfe eines Lasers (11b), der dazu bestimmt ist, ein Loch zu markieren, und eines beweglichen Stempels (11), der so konfiguriert ist, dass er das Loch im Band (5) für das Ventil des Rades (3) herstellt.

13. Verfahren nach Anspruch 12, wobei die Maschine (1) ein Schneidesystem (7) mit einer Klinge (7b) umfasst, die durch einen pneumatischen Kolben (7b) aktiviert wird, wobei das Verfahren die folgenden zusätzlichen Schritte umfasst:
- Bewegen eines Bandabgabesystems (6), bis es mit dem Rad (3) in Berührung kommt,
- Aufkleben des Bandes (5) auf die Unterseite der Felge (3a),
- Drehen des Rades (3) zum Aufkleben des Bandes (5) entsprechend den Parametereinstellungen für das Aufbringen des Bandes,
- Schneiden des Bandes (5) mit der Klinge (7b).

14. Verfahren nach Anspruch 12, wobei die Aktivierung des Abgabesystems (6) die folgenden zusätzlichen Schritte umfasst:
- Einstellen eines Rückhaltesystems (6d) des Abgabesystems (6), das sich auf der Rückseite (2b) des Ständers (2) befindet, um eine bestimmte dosierte Rückhaltung der Achse (6h) einer Rolle (6a) eines Bandes (5) des Abgabesystems (6) auszuüben, so dass das Band (5) auf der Unterseite der Felge (3a) mit einer zum Aufkleben geeigneten Spannung platziert wird.

15. Verfahren nach Anspruch 12, welches die nachfolgenden Schritte umfasst:
- Drehen des Rades (3), um ein Ventilloch an der Stelle zu platzieren, die ein Laser (11b) anzeigt,
- Blockierung des Rades (3) durch eine bewegliche Rolle (4b) des Positionierungs- und Rückhaltesystems (4),
- Bewegen des Stempels (11) entlang einer Führung (11a), um das Loch in dem Band (5) herzustellen,
- Freigeben des Rades (3).

## Revendications

1. Machine (1) pour appliquer un ruban de fond de jante (5) sur une jante (3a), d'une roue (3) de vélo, où la roue (3) est placée sur un bâti (2) de la machine (1) et est fixée au moyen d'un système de positionnement et de maintien (4) configuré afin de permettre à la roue (3) de tourner pour mettre le ruban de fond de jante en place (5) dans la partie inférieure de la jante (3a) grâce à un système de dévidage du ruban (6), où la machine (1) est **caractérisée par le fait qu'**elle comprend :
- un système de mise en forme (8) pour le ruban de fond de jante (5) comprenant au moins un dispositif de chauffage (8b) en face de la roue (3) pour faire chauffer le ruban de fond de jante (5) et au moins un galet presseur (8a) configuré de telle sorte qu'il puisse être déplacé vers la partie inférieure de la jante (3a) pour exercer une pression sur le ruban de fond de jante (5) qui a été chauffé juste avant.

2. Machine (1), conformément à la revendication 1, où la machine (1) comprend un système de coupe (7) et un système d'automatisation (9) configuré pour le réglage des paramètres de pose du ruban, où le système d'automatisation (9) comprend un écran tactile (9a) et est connecté au système de positionnement et de maintien (4), au système de dévidage (6), au système de coupe (7) et au système de mise en forme (8).

3. Machine (1), conformément à la revendication 1, où le système de positionnement et de maintien (4) comprend au moins deux rouleaux fixes (4a) dans une partie inférieure d'un bâti (2) sous la roue (3) et au moins un rouleau mobile (4b) qui se déplace le long d'un guide longitudinal (4c) dans une partie supérieure du bâti (2) au-dessus de la roue (3).

4. Machine (1), conformément à la revendication 3, où le système de dévidage (6) est situé sur une partie supérieure du bâti (2) et se déplace le long d'un guide radial (6g) fixé à la surface arrière (2b) du bâti (2) et parallèle à une rainure de guidage (6c) du bâti (2), où le système de dévidage (6) comprend un rouleau (6a) de ruban de fond de jante (5) fixé à un système de tension (6b), qui comprend au moins trois rouleaux, avec au moins un rouleau (6e) ayant un diamètre supérieur au diamètre des deux autres rouleaux (6g), le système de tension (6b) étant situé entre la roue (3) et le rouleau (6a) sur la surface avant (2a) du bâti (2) et où le système de dévidage (6) comprend également un système de freinage (6d) sur la surface arrière (2b) du bâti (2) configuré pour exercer une force de freinage dosé sur l'axe (6h) du rouleau (6a) du ruban de fond de jante (5).

5. Machine (1), conformément à la revendication 4, où le système de dévidage (6) se déplacement entre la position de repos sur la partie supérieure de la surface avant (2a) et une position de contact avec la roue (3).

6. Machine (1), conformément à la revendication 2, où le système de coupe (7) comprend un vérin pneumatique (7a) sur la surface arrière (2b) du bâti (2) qui est fixé à une lame de coupe (7b).

7. Machine (1), conformément à la revendication 1, où au moins un galet presseur (8a) du système de mise en forme (8) peut être déplacé latéralement le long d'un guide latéral (8c) du bâti (2), entre une position de repos sur une extrémité extérieure du guide latéral (8c) et une position active au contact de la partie inférieure de la jante (3a).

8. Machine (1), conformément à la revendication 1, où au moins un galet presseur (8a) a une épaisseur et une forme égales à la partie inférieure de la jante et est échangeable en fonction des dimensions de la jante à équiper d'un ruban.

9. Machine (1) conformément à la revendication 1, où la machine (1) comprend un poinçon (11) qui peut être déplacé le long d'un guide (11a) et est orienté au moyen d'un laser (11b) conçu pour marquer un orifice, de telle sorte que le poinçon mobile (11) est configuré pour percer un orifice sur le ruban de fond de jante (5) pour la valve de la roue (3).

10. Machine (1), conformément à la revendication 1, où la machine (1) comprend un système de protection configuré pour empêcher les utilisateurs d'approcher le périmètre de la machine (1), le système de protection consistant en des fixations (14) de barrières de sécurité (13) sur les côtés de la surface avant (2a) où les barrières de sécurité émettent des faisceaux lumineux de l'une à l'autre.

11. Procédé de mise en place d'un ruban de fond de jante (5) sur une jante (3a) d'une roue (3) de vélo, où la machine (1) conformément à la revendication 1 est activée pour faire tourner la roue (3) et mettre en place le ruban de fond de jante (5) sur la partie inférieure de la jante (3a), où la méthode comprend par ailleurs les étapes de :
- activation du système de mise en forme (8),
- projection de chaleur sur le ruban de fond de jante (5) de la roue (3) à l'aide d'au moins un dispositif de chauffage (8b),
- puis pression sur le ruban de fond de jante (5) chauffé au moyen d'au moins un rouleau de pression (8a) sur la partie inférieure de la jante (3a).

12. Procédé, conformément à la revendication 11, comprenant les étapes préalables de :
- réglage d'un système d'automatisation (9) en fonction de certains paramètres de pose pour le ruban de fond de jante (5) de la jante (3a).
- mise en place de la roue (3) sur la machine (1) reposant sur au moins deux rouleaux fixes (4a) du système de positionnement et de maintien (4),
- fixation de la roue (3) à l'aide d'un laser (11b) conçu pour marquer un orifice et un poinçon (11) mobile conçu pour percer l'orifice dans le ruban de fond de jante (5) pour la vanne de la roue (3).

13. Procédé, conformément à la revendication 12, où la machine (1) comprend un système de coupe (7) comprenant une lame de coupe (7b) activée par un vérin pneumatique (7a), la méthode comprenant les étapes supplémentaires de :
- déplacement d'un système de dévidage du ruban (6) jusqu'à ce qu'il fasse contact avec la roue (3).
- collage du ruban de fond de jante (5) sur la partie inférieure de la jante (3a).
- rotation de la roue (3) pour coller le ruban de fond de jante (5) en fonction des paramètres de pose définis,
- découpe du ruban de fond de jante (5) avec la lame de coupe (7b).

14. Procédé, conformément à la revendication 12, où l'activation du système de dévidage (6) comprend les étapes supplémentaires de :
- réglage d'un système de freinage (6d) du système de dévidage (6) situé sur la surface arrière (2b) du bâti (2), pour exercer une force de freinage dosé de l'axe (6h) d'un rouleau (6a) de ruban de fond de jante (5) du système de dévidage (6) de telle sorte que le ruban de fond de jante (5) est placé sur la partie inférieure de la jante (3a) avec une tension adéquate pour le coller.

15. Procédé, conformément à la revendication 12, comprenant les étapes suivantes de :
- rotation de la roue (3), pour placer un trou de valve à l'endroit où la projection du laser (11b) l'indique,
- blocage de la roue (3) au moyen d'un rouleau mobile (4b) du système de positionnement et de maintien (4),
- déplacement du poinçon (11) le long d'un guide (11a) pour percer l'orifice dans le ruban de fond de jante (5).
- libération de la roue (3).
